(19) Europäisches Patentamt
European Patent Office
Office européen des brevets

(11)  EP 2 087 379 B1

(12)  **EUROPEAN PATENT SPECIFICATION**

(45) Date of publication and mention
of the grant of the patent:
**11.12.2019 Bulletin 2019/50**

(51) Int Cl.:
*G01V 3/12* *(2006.01)*      *G01V 3/17* *(2006.01)*
*G01V 3/08* *(2006.01)*

(21) Application number: **07851980.8**

(22) Date of filing: **26.11.2007**

(86) International application number:
**PCT/NO2007/000416**

(87) International publication number:
**WO 2008/066389 (05.06.2008 Gazette 2008/23)**

(54) **A METHOD OF MAPPING HYDROCARBON RESERVOIRS IN SHALLOW WATERS AND ALSO AN APPARATUS FOR USE WHEN PRACTISING THE METHOD**

VERFAHREN ZUR KARTIERUNG VON KOHLENWASSERSTOFFLAGERSTÄTTEN IN SEICHTEN GEWÄSSERN UND VORRICHTUNG ZUR UMSETZUNG DES VERFAHRENS

PROCÉDÉ DE MAPPAGE DE RÉSERVOIRS D'HYDROCARBURES DANS DES HAUTS-FONDS ET APPAREIL UTILISÉ POUR METTRE EN OEUVRE LE PROCÉDÉ

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.11.2006 NO 20065436**

(43) Date of publication of application:
**12.08.2009 Bulletin 2009/33**

(73) Proprietor: **Advanced Hydrocarbon Mapping AS**
**4029 Stavanger (NO)**

(72) Inventors:
• **BARSUKOV, Pavel**
**3824 PD Amersfoort (NL)**
• **FAINBERG, Eduard B.**
**3824 PD Amersfoort (NL)**
• **SINGER, Bension Sh.**
**1359 Eiksmarka (NO)**

(74) Representative: **Håmsø Patentbyrå AS**
**P.O. Box 171**
**4301 Sandnes (NO)**

(56) References cited:
WO-A1-02/14906       WO-A1-2004/053528
WO-A1-2004/109338    WO-A2-2004/008183
GB-A- 2 415 785      NO-A- 20 055 168
US-A1- 2006 186 889  US-B1- 6 603 313

**Description**

The invention relates to a method of electromagnetic surveying of electrically resistive targets potentially containing hydrocarbon reservoir and related apparatus, such as for mapping subsea hydrocarbon reservoirs, more particularly by using the TM-mode of an electromagnetic field source for registering a TM-response which is measured by one or more receivers submerged in water, by the use of a substantially vertically or horizontally oriented transmitter and one or more substantially horizontally or, respectively, vertically oriented receivers, and by the generation of intermittent electric current pulses having sharp termination in the transmitter submerged in water, an electromagnetic field generated by these pulses being measured by the receiver/receivers, which is/are submerged in water, in the time interval when the current on the electromagnetic field source is switched off, where the offset of the dipole of the electromagnetic field source and the dipole of the receiver is smaller than the depth to the target object.

Seismic measurements provide reliable information on the existence, location and shape of geological structures containing hydrocarbons. However, seismic measuring methods are often insufficient for determining the potential value of a reservoir and even have difficulties distinguishing between water and fluids containing hydrocarbon in the detected structures. Because of high cost of drilling in marine conditions, exploratory drilling is not very attractive without reliable seismic measurement results. The good capacities of electromagnetic (EM) measurements in measuring the resistivity of the content of a reservoir have become an important factor in the risk analyses of an exploration area.

The Controlled Source ElectroMagnetic (CSEM) methods are widely used in hydrocarbon exploration at sea. The most common CSEM systems include a horizontal transmitter dipole positioned on the sea floor. The dipole is supplied with a strong electric current. Horizontal electric receivers are installed on the sea floor with different offsets to the transmitter. Some modifications of such systems are described in patents by Srnka (1986), Ellingsrud et al. (2001-2005), Eidsmo et al. (2003), MacGregor et al. (2003) and in other publications listed below. In some of these systems magnetic measurements are complemented by electric ones.

The transmitter of the marine CSEM system usually generates either a harmonic current or a sequence of current pulses. After this has been stored, the electromagnetic fields set up by the harmonic current can be used for further interpretations. Unlike this, the field set up by current pulses is subject to transformation into the frequency domain. In particular, Fourier transform from the time into the frequency domain is used in seabed logging (SBL) which is currently the most used CSEM method.

The present marine CSEM systems can detect the target area provided that the horizontal distance between the signal source and receiver (the so-called offset) exceeds by many times the depth of the reservoir. This condition ensures that the EM-field will propagate from the transmitter to the receiver via the bedrock underneath the sediment structure. On the other hand, a great offset will make the measurements vulnerable to distortion as the EM-field propagates through air. According to Constable (2006) and Constable and Weiss (2006) the effect of the EM-field propagating through air makes the conventional SBL technique unusable for exploration in shallow waters, that is to say, the conventional SBL technique is considered unreliable for water depths of under 300 metres.

This drawback of the most popular CSEM system reflects a more fundamental issue, namely the fact that the transversal electric (TE) mode of the field contributes to the horizontal, in-line, electric field. It is known that the TE mode, unlike the transversal magnetic (TM) mode, is not very sensitive to resistive targets.

Edwards and Chave (1986) used a CSEM configuration measuring the step-on transient response for a horizontal, in-line electric dipole-dipole system. This configuration was later applied by Edwards (1997) to survey a deposit of gas hydrates. In the survey, the acquired in-line electric field was complemented by the broadside electric field. The broadside component is less sensitive with respect to resistive targets. Therefore, it can be used for determination of the background cross-section (Ellingsrud et al. 2001-2005) and enhances the deviant cross-section acquired in the in-line measurement. In these trials the transmitter-to-receiver offset was varied in the range 300 to 1300 m. This system showed higher resolution than SBL systems working in the conventional frequency domain. But it does not make it possible to explore for hydrocarbon reservoirs at depths exceeding several hundred metres.

Edwards et al. (1981,1984, 1985) proposed a method of magnetometric electrical sounding at sea (Magnetometric Off-Shore Electrical Sounding Method - MOSES). The system consists of a vertical cable which extends from the sea surface to the seabed and is supplied with an alternating electric current. A magnetic sensor measures the azimuthal component of the magnetic field at the seabed. A clear advantage of MOSES is its reliability in the TM mode of the electromagnetic field. The drawbacks of the system are its large offset dimensions, which are necessary for providing a sufficient signal level and sensitivity to the deep parts of substrates, and the registration of the TE mode of the field, forming, together with the TM mode, the response from the investigated resistive structure, largely comprising noise.

The most common drawbacks of all the CSEM methods described are the necessity of using considerable offsets, generally exceeding the depth to the target by a factor of 5 to 10.

Barsukov et al. (2005), represented by the present applicant's patent publication NO 20055168, propose a TEMP-VEL configuration which features vertical transmitter and receiver lines for setting up a current in the sea and measuring the electric field. In that way the TEMP-VEL configuration generates in a layered stratum an electromagnetic field consisting of only the TM mode. Additionally, the system measures only the TM mode of the electromagnetic field. The TEMP-VEL configuration is set for late time measurement if the medium-time domain responds. The horizontal separation of the transmitter from the receiver is considerably smaller than the depth of the target. These characteristics of the system provide maximum sensitivity with respect to the resistive target.

Unlike SBL systems of the frequency domain type, the TEMP-VEL configuration does not lose its sensitivity when used at small water depths. On the other hand, a normal use of this system in shallow water is problematic because the vertical orientation of transmitter and receiver cables does not allow significant levels of the measured signals to be achieved. This condition places restrictions on how deep a target can be detected by the use of TEMP-VEL in shallow water.

The invention has for its object to remedy or reduce at least one of the drawbacks of the prior art.

The object is achieved through features which are specified in the description below and in the claims that follow.

The invention is defined by the claims appended hereto. According to a first aspect f the invention, there is provided a method as set out in claim 1. The first aspect may have further features as set out in any of claims 2 to 7. According to a second aspect of the invention, there is provided an apparatus as set out in claim 8. According to a third aspect of the invention, there is provided an apparatus as set out in claim 9. The second or third aspects may have further features as set out in any of claims 10 to 13.

The invention can provide for shallow and deep water electromagnetic prospecting of hydrocarbon reservoirs, including investigation of the reservoir geometry and determination of the water saturation of the formations included in the reservoir.

The method of the first aspect can provide for the detection of a reservoir and determination of its properties by the use of the TM mode of the electromagnetic field induced in the subsea stratum. This electric field mode is very sensitive to resistive targets located in sedimentary, marine substrates. The electric measurements are carried out by the use of vertical receiver cable/cables if a horizontal line is used for setting up a current in the water. In the same way, the measurements are carried out by the use of horizontal receiver cable/cables if a vertical line is used to set up the electric current. In both cases the terminations of the transmitter cable and measuring electrodes will remain in the same vertical plane.

Below, the term "an orthogonal setup" will be used to describe such an acquisition configuration.

The apparatus of the second aspect or the third aspect can provide for determining the reservoir content and exhibit an orthogonal configuration of transmitter and receiver cables, in order, thereby, either to generate the TM field or, alternatively, to generate both modes, but with measurement of only the TM field.

According to the invention, the transmitter generates and transmits through the cable a sequence of current pulses characterized by a sharp termination (rear front). The receiver measures the voltage difference which corresponds to the component of the electric field which is orthogonal to the straight line connecting the terminations of the transmitter cables. The measurement is carried out in the intervals between injected current pulses. The steepness of the rear front, the stability of the pulse amplitude and the duration of the pulse ensure the pulse-form independency of the measured response. This independency is maintained for measurement intervals corresponding to the depth of the target investigated.

According to the invention the measurement is carried out under near-zone conditions when the horizontal distance between the centres of the transmitter and receiver cables is smaller than the depth to the target.

According to an embodiment of the invention, a plurality of electrical receiver cables satisfying the geometric conditions given above is used for synchronous data acquisition to increase the survey effectiveness.

The main concepts of the present invention are illustrated in the accompanying figures, in which the new TEMP-OEL (Transient Electromagnetic Marine Prospect - Orthogonal Electric Lines) configuration according to the invention is also compared with the conventional SBL frequency domain and TEMP-VEL time domain configurations. The responses of all three configurations are plotted for deep water (a water layer 1000 m thick) and shallow water (a water layer 50 m thick). In all the models the resistivity of the sea water equals 0,32 $\Omega$m, whereas the resistivity of the above layer and half-space below the target layer, is 1 $\Omega$m. The transversal resistance of the target layer is 2000 $\Omega$m$^2$, corresponding to, for example, a layer 50 m thick with a resistivity of 40 $\Omega$m.

With each of the configurations there has also been testing with target layers located at different depths below the seabed. The responses calculated for the thicknesses 1000, 2000, 3000, 4000 and 5000 m of the overlying layer are shown by different curves. There is also shown the response for a model without oil, a resistive layer not being present here.

The following figures and their descriptions are examples of preferred embodiments and should not be considered as limiting to the invention.

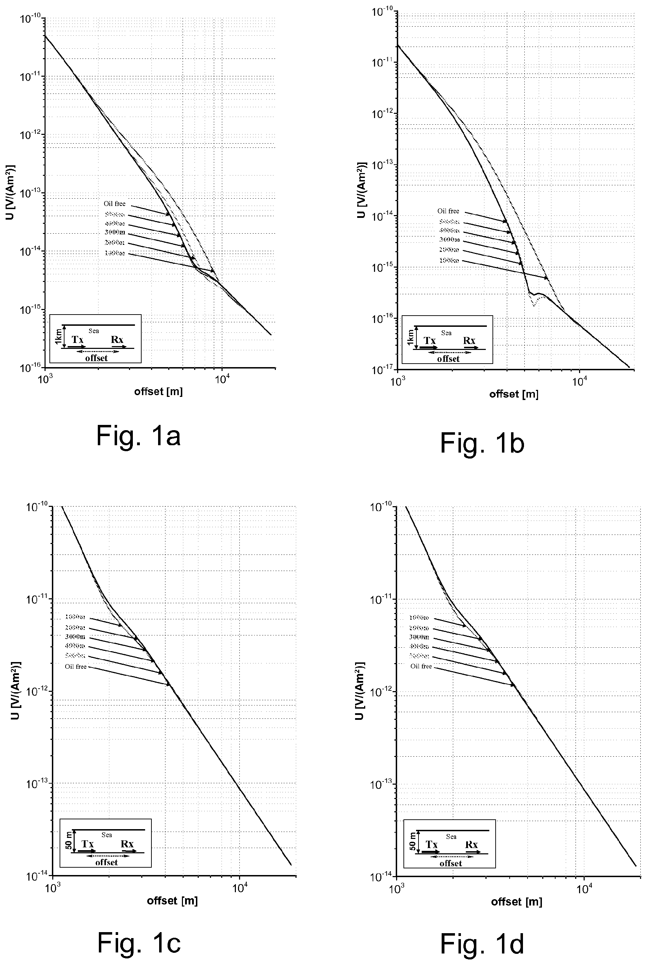

Figure 1    shows the resolution of a conventional CSEM measurement (in-line TxRx configuration) which is based on voltage measurements in the frequency domain as a function of offset. This is a configuration much used for marine hydrocarbon exploration (SBL and other systems). Diagram (a) shows the response for a model for deep water for a period of 4 sec., diagram (b) relates to the same model for a period of 1 sec. In the same way the diagrams (c) and (d) show the responses for a model for shallow water for periods of, respectively, 4 sec. and 1 sec. All responses are normalized by the product of the source dipole moment and the length of the receiver dipole.

Figure 2    shows the step-down voltage response as a function of time after the source has been switched off for the TEMP-VEL system according to Barsukov et al. (2005). The responses are shown for (a) deep and (b) shallow water. The offset is 300 m. The voltage is normalized by the impressed current.

Figure 3    shows two alternative configurations for the TEMPOEL system.

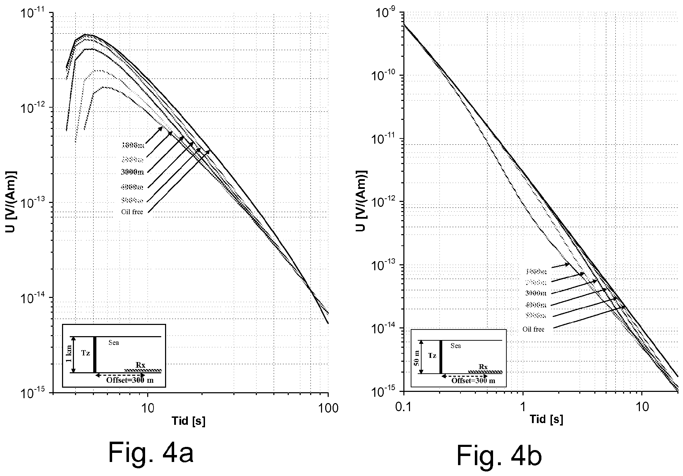

Figure 4    shows the step-down voltage response as a function of time after the source of the new TEMP-OEL system has been switched off. The responses are shown for (a) deep and (b) shallow water. The offset is 300 m. For the TzRx configuration (corresponding to the configuration shown in figure 3a) the voltage is normalized by the product of the impressed current and the length of the receiver dipole; for the TxRz configuration the response is normalized by the source dipole moment.

Figure 5    shows schematically a side view of an electromagnetic surveying system with a vertical transmitter cable and horizontal receiver cables (corresponding to the configuration shown in figure 3a) according to the present invention.

Figure 6    shows schematically a side view of an electromagnetic surveying system with a horizontal transmitter cable and vertical receiver cables (corresponding to the configuration shown in figure 3b) according to the present invention.

The method proposed according to the present invention can be applied in shallow and deep waters. It is characterized by high sensitivity and high resolution with respect to resistive targets. In addition, the new method and the new apparatus provide greater effectiveness in surveying than the TEMP-VEL system which uses vertical transmitter and receiver cables.

Firstly, the use of one of two possible configurations is achieved. In the first configuration the electric field is impressed by the use of a vertical cable creating only a TM-electromagnetic field in a stratified medium.

In this configuration a horizontal, radially directed cable is used for registering the cross-sectional response. In the second configuration a horizontal transmitter cable is used for impressing current into the water, whereas a vertical receiver is used for measuring the vertical component of the electric field associated with the TM-field. In this way the system with mutually orthogonal transmitter and receiver cables measures the TM-mode response in the structure as high sensitivity to resistive targets is provided. At the same time, the deployment of a horizontal cable, which is used either for sending or receiving signals, provides the necessary signal level even though the survey is performed in shallow waters.

Secondly, tilt indicators are used on the lines to provide the necessary accuracy in the measurements.

Thirdly, the transmitter impresses a sequential series of current pulses on the transmitter cable, the rear front of the pulse being steep. To avoid complications connected with an imperfect form of the current pulses (Wright, 2005), the new method requires that the steepness of the rear pulse front, the pulse duration and the stability of the pulse amplitude satisfy accurate specifications in order for the response corresponding to the target depth of the survey to be independent of pulse form.

Fourthly, the system measures fields of dying current flowing in the stratum after the transmitter has been switched off. Data acquisition, data processing and data interpretation are carried out in the time domain.

Fifthly, the horizontal distance between the centres of the transmitter and receiver cables satisfies the conditions of near zone. This distance is smaller than the target depth, which is measured from the seabed.

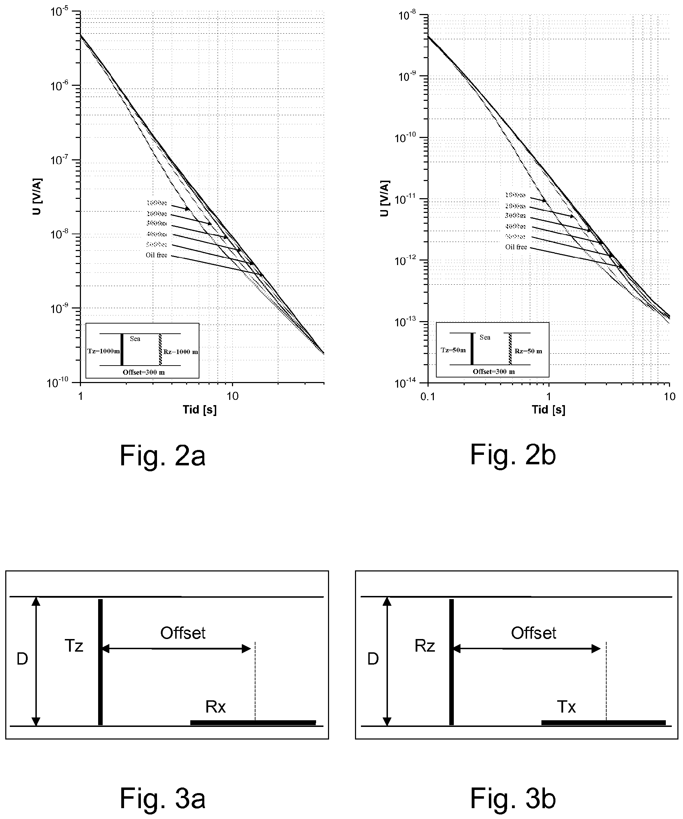

One of the possible configurations of the new system is shown in figure 3a. In this configuration the system impresses electric current into the water by the use of a vertical transmitter cable Tz. Such a source creates a TM-electromagnetic field in a stratified medium. A horizontal receiver cable Rx is extended on the seabed. The length is chosen to provide a signal level which can be measured in a reliable manner and with the required accuracy.

Another possible configuration according to the new system is shown in figure 3b. The system sets up electric current in the water, using a horizontal transmitter cable Tx. A vertical receiver cable Rz is used to pick up the signal. Such a receiver measures the Ez component of the electric field which is associated with the TM-mode. In this configuration the necessary signal level is provided by deployment of a transmitter cable of a corresponding length. Both configurations provide the same sensitivity to resistive targets.

The measured responses can be converted from voltage into apparent resistivity format either by direct conversion or by comparison with the response of a two-layer structure consisting of a sea water layer f of an appropriate thickness and a corresponding half-space.

The concepts forming the basis of the TEMP-OEL method as described hereinabove are realized in an apparatus according to the invention.

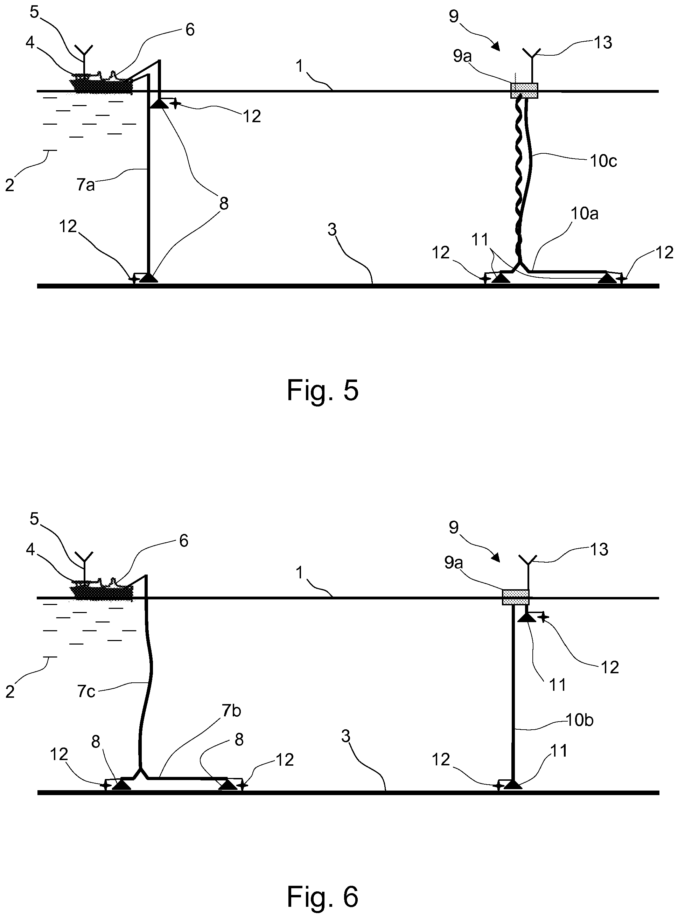

Figure 5 shows a schematic view in which the reference numeral 1 indicates a water surface of a water layer 2 above a seabed 3 and with a vessel 4 floating on the water surface 1. A vertical transmitter cable 7a is terminated by water-filled transmitter electrodes 8.

A horizontal receiver cable 10a connects receiver electrodes 11 to a registration unit 9 comprising a surface buoy 9a and a connecting cable 10c.

The positioning and orientation of the electrodes 8, 11 are controlled by tilt sensors / transponders 12.

The vessel 4 is provided with a radio station 6 and an aerial 5. The registration unit 9 is provided with an aerial 13 for signal communication with the radio station 6 of the vessel 4.

Figure 6 shows schematically a view of an alternative configuration, the reference numeral 7b indicating a horizontal transmitter cable and 10b indicating vertical receiver cables.

The horizontal transmitter cable 7b is connected to the vessel 4 via a connecting cable 7c.

In both configurations the measuring electrodes are to remain in the same vertical plane as the terminations of the transmitter cable.

In a main mode of operation of the TEMP-OEL, the vessel 4, transmitter 7a, 7b and receivers 11a, 11b are fixed in their positions for a period sufficient for achieving the prescribed quality of the acquired data. The radio station 6 and aerials 5, 13 are used for communication between the transmitter 7a, 7b and the receivers 10a, 10b, especially to control the data acquisition while the survey is going on. This enables repetition of measurements if, in a measurement, a satisfactory signal quality has not been achieved.

The tilt sensors/transponders 12 are used for accurate determination of the positions of the transmitter and receiver electrodes 8, 11.

The data acquired is processed, analysed and transformed into diagram plots for voltage/apparent resistivity versus time and depth and/or 1D inversion. Whenever necessary, transformation into 2,5D and 3D inversions and interpretation of these can be carried out.

**Literature list**

US patents

| Publication No. | Published | Applicant |
| --- | --- | --- |
| 4,644,892 | 10/1985 | Kaufman et al. |
| 4,617,518 | 10/1986 | Srnka |
| 5,563,513 | 10/1996 | Tasci |
| 6,320,386 B1 | 11/2001 | Balashov et al. |
| 0052685 A1 | 03/2003 | Ellingsrud et al. |

(continued)

| Publication No. | Published | Applicant |
| --- | --- | --- |
| 0048105 A1 | 03/2003 | Ellingsrud et al. |
| 6,628,119 B1 | 10/2003 | Eidesmo et al. |
| G01V003/12 | 08/2004 | Ellingsrud et al. |
| G01V001/00 | 01/2005 | Ellingsrud et al. |
| G01V003/08 | 10/2005 | Wright et al. |
| 324334000 | 02/2006 | Constable |

Other patent publications

| Publication No. | Published | Applicant |
| --- | --- | --- |
| WO 01/57555 A1 | 09/2001 | Ellingsrud et al. |
| WO 02/14906 A1 | 02/2002 | Ellingsrud et al. |
| WO 03/025803 A1 | 03/2003 | Srnka et al. |
| WO 03/034096 A1 | 04/2003 | Sinha et al. |
| WO 03/048812 A1 | 06/2003 | MacGregor et al. |
| NO 20055168 | 11/2005 | Barsukov et al. |

Other publications

Amundsen H.E.F., Fanavoll S., Loseth L., Simonsen I., Skogen E. 2003: Svanen Sea Bed Logging (SBL) Survey Report.

Amundsen H.E.F., Johansen S. Røsten T. 2004: A Sea Bed Logging (SBL) calibration survey over the Troll Gas Field. 66th EAGE Conference & Exhibition, Paris, Frankrike, 6.-10. June 2004.

Chave A.D., Cox C.S. 1982: Controlled Electromagnetic Sources for Measuring Electrical conductivity Beneath the Oceans 1. Forward Problem and Model Study. Journal of geophysical Research, 87, B7, p. 5327-5338.

Chave A. D., Constable S.C., Edwards R.N. 1991: Electrical Exploration Methods for the Seafloor. Chapter 12. Ed. by Nabighian, Applied Geophysics, v. 2, Soc. Explor. Geophysics, Tusla, Okla., p. 931-966.

Cheesman S.J., Edwards R.N., Chave A.D. 1987: On the theory of sea floor conductivity mapping using transient electromagnetic systems. Geophysics, v. 52, N2, p. 204-217.

Chew W.C., Weedon W.H. 1994: A 3D perfectly matched medium from modified Maxwell's equations with stretched coordinates. IEEE Microwave and Guided Wave letters, 4, p. 268-270.

Cox C.S., Constable S.C., Chave A.D., Webb S.C. 1986: Controlled source electromagnetic sounding of the oceanic lithosphere. Nature, 320, p. 52-54.

Constable S.C., Orange A.S., Hoversten G.M., Morrison H.F. 1998: Marine magnetotellurics for petroleum exploration. Part 1: A sea floor equipment system. Geophysics, v. 63, N3, p. 816-825.

Constable, 2006: Marine electromagnetic methods - A new tool for offshore exploration. The Leading Edge, v. 25, p. 438-444.

Constable & C. J. Weiss, 2006: Mapping thin reservoirs and hydrocarbons with marine EM methods: Insights from 1D modeling. Geophysics, v. 71, p. G43-G51.

Coggon J.H., Morrison. H.F. 1970: Electromagnetic investigation of the sea floor: Geophysics, v. 35, p. 476-489.

Edwards R.N., Law, L.K., Delaurier, J.M. 1981: On measuring the electrical conductivity of the oceanic crust by a modified magnetometric resistivity method: J. Geophys. Res., v. 68, p. 11609-11615.

Edwards R.N., Nobes D.C., Gomez-Trevino E. 1984: Offshore electrical exploration of sedimentary basins: the effects of anisotropy in horizontally isotropic, layered media. Geophysics, v. 49, N 5, p. 566-576.

Edwards R.N., Law L.K., Wolfgram P.A., Nobes D.C., Bone M.N., Trigg D.F., DeLaurier J.M. 1985: First results of the MOSES experiment: Sea sediment conductivity and thickness determination. Bute Inlet, British Columbia, by magnetometric off-shore electrical sounding. Geophysics, v. 450, N1, p. 153-160.

Edwards R.N. and Chave A.D. 1986: On the theory of a transient electric dipole-dipole method for mapping the conductivity of the sea floor: Geophysics, v. 51, p. 984-987.

Edwards R. 1997: On the resource evaluation of marine gas hydrate deposits using sea-floor transient dipole-dipole method. Geophysics, v. 62, N1, p. 63-74.

Edwards R.N. 1998: Two-dimensional modeling of a towed in-line electric dipole-dipole sea-floor electromagnetic system: The optimum time delay or frequency for target resolution. Geophysics, v. 53, N6, p. 846-853.

Eidesmo T., Ellingsrud S., MacGregor L.M., Constable S., Sinha M.C., Johansen S.E., Kong N. and Westerdahl, H. 2002: Sea Bed Logging (SBL), a new method for remote and direct identification of hydrocarbon filled layers in deepwater areas. First Break, 20. mars, p. 144-152.

Ellingsrud S., Sinha M.C., Constable S., MacGregor L.M., Eidesmo T. and Johansen S.E. 2002: Remote sensing of hydrocarbon layers by Sea Bed Logging (SBL): results from a cruise offshore Angola. The Leading Edge, 21, p. 972-982.

Farelly B., Ringstad C., Johnstad C.E., Ellingsrud S. 2004: Remote Characterization of hydrocarbon filled reservoirs at the Troll field by Sea Bed Logging. EAGE Fall Research Workshop Rhodos, Hellas, 19.-23. september 2004.

Greer A.A., MacGregor L.M. and Weaver R. 2004: Remote mapping of hydrocarbon extent using marine Active Source EM sounding. 66th EAGE Conference & Exhibition, Paris, Frankrike, 6.-10. juni 2004.

Haber E., Ascher U. and Oldenburg D.W. 2002: Inversion of 3D time domain electromagnetic data using an all-at-once approach: submitted for presentation at the 72nd Ann. Internat. Mtg: Soc. of Expl. Geophys.

Howards R.N., Law L.K., Delaurier J.M. 1981: On measuring the electrical conductivity of the oceanic crust by a modified magnetometric resistivity method: J. Geophys. Res., 86, p. 11609-11615.

Johansen S.E., Amundsen H.E.F., Røsten T., Ellinsgrud S., Eidesmo T., Bhuyian A.H. 2005: Subsurface hydrocarbon detected by electromagnetic sounding. First Break, v. 23, p. 31-36.

Kaufman A.A., and Keller G.V., 1983: Frequency and transient soundings: Amsterdam, Elsevier Science Publ. Co., p. 411-454.

Kong F.N., Westerdahl H, Ellingsrud, S., Eidesmo T. and Johansen S. 2002. 'Seabed logging': A possible direct hydrocarbon indicator for deep sea prospects using EM energy: Oil and Gas Journal, 13. mai 2002, p. 30-38.

MacGregor L., Sinha M. 2000: Use of marine controlled-source electromagnetic sounding for sub-basalt exploration. Geophysical prospecting, v. 48, p. 1091-1106.

MacGregor L., Sinha M., Constable S. 2001: Electrical resistivity of the Valu Fa Ridge, Lau Basin, from marine controlled-source electromagnetic sounding. Geoph. J. Intern. v. 146, p. 217-236.

MacGregor L., Tompkins M., Weaver R., Barker N. 2004: Marine ) active source EM sounding for hydrocarbon detection. 66th EAGE Conference & Exhibition, Paris, Frankrike, 6.-10. juni 2004.

Marine MT in China with Phoenix equipment. 2004. Publisert av Phoenix Geophysics Ltd., utgave 34, desember 2004, p. 1-2.

Singer B.Sh., Fainberg E.B. 1985: Electromagnetic induction in non-uniform thin layers, IZMIRAN, p. 234.

Singer B. Sh. 1995: Method for solution of Maxwell's equations in non-uniform media. Geophysical Journ. Int. 120, p. 590-598.

Singer, B. Sh., Mezzatesta, A. & Wang, T., 2003: Integral equation approach based on contraction operators and Krylov space optimization, in Macnae, J. and Liu, G. (eds), "Three-Dimensional Electromagnetics III", ASEG, 26, p. 1-14.

Singer, B. Sh. & Fainberg, E. B., 2005: Fast inversion of synchronous soundings with natural and controllable sources of the electromagnetic field. Izvestiyu, Physics of the Solid Earth, 41, 580-584. (Translated from Fizika Zemli, 2005, N 7, p. 75-80).

Sinha, M.C., Patel P.D., Unsworth M.J., Owen T. R.E., MacCormack M.R.G., 1990: An Active Source Electromagnetic Sounding System for Marine Use, Marine Geophys. Res., 12, p. 59-68.

Tompkins M., Weaver R., MacGregor L. 2004: Sensitivity to hydrocarbon targets using marine active source EM sounding: diffusive EM mapping methods. 66th EAGE Conference & Exhibition, Paris, Frankrike, 6.-10. juni 2004.

Wright D.A., Ziolkowski A., Hobbs B.A. 2001: Hydrocarbon detection with a multi-channel transient electromagnetic survey, 70th Ann. Internat. Mtg,, Soc. of Expl. Geophys.

Wicklund T.A., Fanavoll S. 2004: Norwegian Sea: SBL case study. 66th EAGE Conference & Exhibition, Paris, Frankrike, 6.-10. juni 2004.

Wolfgram P.A., Edwards R.N., Law L.K., Bone M.N. 1986: Polymetallic sulfide exploration on the deep sea floor: The feasibility of the MINI-MOSES experiment. Geophysics, v. 51, N9, p. 1808-1818.

Yuan J., Edward R.N. 2001: Towed seafloor electromagnetics and assessment of gas hydrate deposits. Geophys. Res. Lett. v. 27, N6, p. 2397-2400.

Yuan J., Edward R.N. 2004: The assessment of marine gas hydrates through electrical remote sounding: Hydrate without BSR? Geophys. Res. Lett. V. 27, N16, p. 2397-2400.

Ziolkovsky A., Hobbs B., Wright D. 2002: First direct hydrocarbon detection and reservoir monitoring using transient electromagnetics. First Break, v. 20, No4, p. 224-225.

## Claims

1. A method of electromagnetic surveying of electrically resistive targets potentially containing hydrocarbon reservoirs, wherein the method comprises the steps of:

   - determining electrical characteristics of strata to be investigated, using the TM mode of an electromagnetic field;
   - transmitting intermittent current pulses, **characterized by** a sharp termination, in a submerged vertically or horizontally oriented cable (7a, 7b) and acquiring a medium response during pauses between successive current pulses by the use of a horizontal or, respectively, vertical receiver cable (10a, 10b); and
   - measuring the stratum response in the near zone, that is to say, with a horizontal source-receiver offset which satisfies the condition

   $$R < \sqrt{t\rho_a(t)/\mu_0}\,,$$

   in which t is the time lapse after the transmitter has been switched off, $\mu_0 = 4\pi \cdot 10^{-7}$ H/m, and $\rho\alpha(t)$ is the apparent resistivity of the substratum for the time lapse t.

2. The method of electromagnetic surveying according to claim 1, **characterized in that** multiple receivers (10a, 10b) are used.

3. The method of electromagnetic surveying according to claim 1 or 2, **characterized in that** the orientation of the transmitter cable (7a, 7b) and transmitter electrodes (8) is controlled by tilt sensors (12).

4. The method of electromagnetic surveying according to any one of claims 1 to 3, **characterized in that** all measurements are carried out with moving or stationary sources (7a, 7b, 8) and moving or stationary receivers (10a, 10b, 11).

5. The method of electromagnetic surveying according to any one of claims 1 to 4, **characterized in that** current pulses following in a particular sequence are incoherent with the noise, and the response measured at each receiver is stacked in order, thereby, to provide a signal-to-noise ratio sufficient for the purpose.

6. The method of electromagnetic surveying according to claim 5, **characterized in that** further suppression of the noise is achieved by means of registration of water pressure and temperature at the receiver locations.

7. The method according to any one of claims 1 to 6, **characterized in that** a decision on the continuation of the data acquisition, change of operational mode, change of location or retrieval of all or some of the instruments is made after the acquired data have been evaluated and/or fully or partially interpreted.

8. An apparatus for the electromagnetic surveying of electrically resistive targets potentially containing hydrocarbon reservoirs, wherein the apparatus comprises:

   - a submerged vertically (7a) oriented cable which is arranged to function as a transmitter of an electromagnetic field;
   - an electric power source and a transformer which are arranged to supply the transmitter cable (7a) with series of meander type pulses, the duration of an individual pulse being in the range of 0.01 to 50 seconds, the amplitude of 100-5000 A and having a steep rear front; **characterized in that** the apparatus further comprises
   - a submerged, horizontally (10a) oriented cable installed in the near zone of the transmitter (7a) and arranged to measure the electric field during pauses between the current pulses.

9. An apparatus for the electromagnetic surveying of electrically resistive targets potentially containing hydrocarbon reservoirs, wherein the apparatus comprises:

   - a submerged horizontally (7b) oriented cable which is arranged to function as a transmitter of an electromagnetic field;
   - an electric power source and a transformer which are arranged to supply the transmitter cable (7b) with series of meander type pulses, the duration of an individual pulse being in the range of 0.01 to 50 seconds, the amplitude of 100-5000 A and having a steep rear front; **characterized in that** the apparatus further comprises
   - a submerged, vertically (10b) oriented cable installed in the near zone of the transmitter 7(b) and arranged to measure the electric field during pauses between the current pulses.

10. The apparatus according to claim 8 or 9, **characterized in that** it includes further receiver cables for receiving and simultaneously registering components of the electric field within the near zone of the transmitter.

11. The apparatus according to any one of claims 8 to 10, **characterized in that**, in addition, there are transponders and tilt sensors (12) placed at the ends of the transmitter and receiver cables (7a, 7b, 10a, 10b).

12. Apparatus according to any one of claims 8 to 11, **characterized in that**, in addition, there are pressure sensors and temperature sensors placed at the ends of the receiver cables (10a, 10b).

13. The apparatus according to any one of claims 8 to 12, **characterized in that** it includes means (5, 6, 13) for real-time transmission of at least a selection of the acquired data to a central processing unit.

**Patentansprüche**

1. Verfahren zur elektromagnetischen Vermessung von elektrisch resistiven Zielen, die potenziell Kohlenwasserstoff-Reservoirs enthalten, wobei das Verfahren die folgenden Schritte umfasst:

   - Bestimmen elektrischer Eigenschaften der zu untersuchenden Strata unter Verwendung des TM-Modus eines elektromagnetischen Felds;
   - Senden von intermittierenden Stromimpulsen, die durch einen scharfen Abschluss gekennzeichnet sind, in einem eingetauchten, vertikal oder horizontal orientierten Kabel (7a, 7b) und Erfassen einer Medium-Reaktion während Pausen zwischen aufeinanderfolgenden Stromimpulsen unter Verwendung eines horizontalen bzw. vertikalen Empfängerkabels (10a, 10b); und
   - Messen der Stratum-Reaktion in der Nahzone, d.h. mit einem horizontalen Quell-Empfänger-Offset, der die Bedingung $R < \sqrt{t\rho_\alpha(t)/\mu_0}$ erfüllt, wobei $t$ der Zeitablauf nach dem Ausschalten des Senders ist, $\mu_0 = 4\pi\,10^{-7}$ $H/m$, und $\rho\alpha(t)$ der scheinbare Widerstand des Sub-Stratums für den Zeitablauf t ist.

2. Verfahren zur elektromagnetischen Vermessung nach Anspruch 1, **dadurch gekennzeichnet, dass** mehrere Empfänger (10a, 10b) verwendet werden.

3. Verfahren zur elektromagnetischen Vermessung nach Anspruch 1 oder 2, **dadurch gekennzeichnet, dass** die Orientierung des Senderkabels (7a, 7b) und der Senderelektroden (8) durch Neigungssensoren (12) gesteuert wird.

4. Verfahren zur elektromagnetischen Vermessung nach einem der Ansprüche 1 bis 3, **dadurch gekennzeichnet, dass** alle Messungen mit beweglichen oder stationären Quellen (7a, 7b, 8) und beweglichen oder stationären Empfängern (10a, 10b, 11) durchgeführt werden.

5. Verfahren zur elektromagnetischen Vermessung nach einem der Ansprüche 1 bis 4, **dadurch gekennzeichnet, dass** Stromimpulse, die in einer bestimmten Sequenz folgen, mit dem Rauschen inkohärent sind, und die an jedem Empfänger gemessene Reaktion der Reihe nach gestapelt wird, um dadurch ein für den Zweck ausreichendes Signal-Rausch-Verhältnis bereitzustellen.

6. Verfahren zur elektromagnetischen Vermessung nach Anspruch 5, **dadurch gekennzeichnet, dass** eine weitere Unterdrückung des Rauschens durch Erfassung von Wasserdruck und Temperatur an den Empfangsstellen erreicht wird.

7. Verfahren nach einem der Ansprüche 1 bis 6, **dadurch gekennzeichnet, dass** eine Entscheidung über die Fortsetzung der Datenerfassung, die Änderung der Betriebsart, den Standortwechsel oder die Rückholung aller oder eines Teils der Instrumente getroffen wird, nachdem die erfassten Daten ausgewertet und/oder ganz oder teilweise interpretiert wurden.

8. Vorrichtung zur elektromagnetischen Vermessung von elektrisch resistiven Zielen, die potentiell Kohlenwasserstoff-Reservoirs enthalten, wobei die Vorrichtung umfasst:

   - ein eingetauchtes, vertikal (7a) orientiertes Kabel, welches angeordnet ist, um als ein Sender eines elektromagnetischen Felds zu fungieren;
   - eine elektrische Energiequelle und einen Transformator, welche angeordnet sind, um das Senderkabel (7a) mit einer Reihe von mäanderartigen Impulsen zu versorgen, wobei die Dauer eines einzelnen Impulses im Bereich von 0,01 bis 50 Sekunden liegt, die Amplitude von 100-5000 A und aufweisend eine steile hintere Vorderseite;

   **dadurch gekennzeichnet, dass** die Vorrichtung ferner umfasst:

   - ein eingetauchtes, horizontal (10a) orientiertes Kabel, welches im Nahbereich des Senders (7a) installiert und angeordnet ist, um das elektrische Feld während Pausen zwischen den Stromimpulsen zu messen.

9. Vorrichtung zur elektromagnetischen Vermessung von elektrisch resistiven Zielen, die potentiell Kohlenwasserstoff-Reservoirs enthalten, wobei die Vorrichtung umfasst:

   - ein eingetauchtes, horizontal (7b) orientiertes Kabel, welches angeordnet ist, um als ein Sender eines elektromagnetischen Felds zu fungieren;
   - eine elektrische Energiequelle und einen Transformator, welche angeordnet sind, um das Senderkabel (7b) mit einer Reihe von mäanderartigen Impulsen zu versorgen, wobei die Dauer eines einzelnen Impulses im Bereich von 0,01 bis 50 Sekunden liegt, die Amplitude von 100-5000 A und aufweisend eine steile hintere Vorderseite;

   **dadurch gekennzeichnet, dass** die Vorrichtung ferner umfasst:

   - ein eingetauchtes, vertikal (10b) orientiertes Kabel, welches im Nahbereich des Senders (7b) installiert und angeordnet ist, um das elektrische Feld während Pausen zwischen den Stromimpulsen zu messen.

10. Vorrichtung nach Anspruch 8 oder 9, **dadurch gekennzeichnet, dass** sie weitere Empfänger-Kabel zum Empfangen und gleichzeitigen Registrieren von Komponenten des elektrischen Felds innerhalb der Nahzone des Senders beinhaltet.

11. Vorrichtung nach einem der Ansprüche 8 bis 10, **dadurch gekennzeichnet, dass** zusätzlich Transponder und Neigungssensoren (12) an den Enden der Sender- und Empfängerkabel (7a, 7b, 10a, 10b) platziert sind.

12. Vorrichtung nach einem der Ansprüche 8 bis 11, **dadurch gekennzeichnet, dass** zusätzlich Drucksensoren und Temperatursensoren an den Enden der Empfängerkabel (10a, 10b) platziert sind.

13. Vorrichtung nach einem der Ansprüche 8 bis 12, **dadurch gekennzeichnet, dass** sie Mittel (5, 6, 13) zur Echtzeitübertragung von mindestens einer Auswahl der erfassten Daten an eine zentrale Verarbeitungseinheit beinhaltet.

**Revendications**

1. Un procédé pour la surveillance électromagnétique de cibles électriquement résistives potentiellement contenant des réservoirs d'hydrocarbures, dans lequel le procédé comprend les étapes de:

17      **EP 2 087 379 B1**      18

- déterminer les caractéristiques électriques des strates à étudier, en utilisant le mode TM d'un champ électromagnétique;

- transmettre des impulsions intermittentes, **caractérisées par** un terminaison brusque, dans un câble immergé orienté en verticale ou horizontale (7a, 7b) et acquérir une réponse de médium pendant les pauses entre les impulsions de courant successives en utilisant un câble récepteur vertical ou respectivement horizontal (10a, 10b); et

- mesurer la réponse de strate dans la zone proximale, c.-à-d. avec un décalage horizontal source-récepteur qui satisfait à la condition

$$R < \sqrt{t\rho_\alpha(t)/\mu_0}$$ , dans laquelle $t$ est le laps de temps après que l'émetteur a été éteint, $\mu_0 = 4\pi \cdot 10^{-7}\ H/m$ et $\rho\alpha(t)$ est la résistivité apparente de la sous-strate pour le laps de temps t.

2. Le procédé pour la surveillance électromagnétique selon la revendication 1, **caractérisé en ce que** de multiples récepteurs (10a, 10b) sont utilisés.

3. Le procédé pour la surveillance électromagnétique selon la revendication 1 ou 2, **caractérisé en ce que** l'orientation du câble émetteur (7a, 7b) et des électrodes émettrices (8) est commandée par des moyens d'inclinaison (12).

4. Le procédé pour la surveillance électromagnétique selon l'une quelconque des revendications 1 à 3, **caractérisé en ce que** toutes les mesures sont effectuées avec des sources déplaçables ou stationnaires (7a,7b, 8) et des récepteurs déplaçables ou stationnaires (10a, 10b, 11).

5. Le procédé pour la surveillance électromagnétique selon l'une quelconque des revendications 1 à 4, **caractérisé en ce que** les impulsions de courant qui se suivent dans une séquence particulière sont incohérentes avec le bruit, et la réponse mesurée au niveau de chaque récepteur est superposée de sorte à ainsi obtenir un rapport signal sur bruit suffisant pour le but.

6. Le procédé pour la surveillance électromagnétique selon la revendication 5, **caractérisé en ce qu'**une suppression supplémentaire du bruit est atteinte au moyen d'un enregistrement de la pression de l'eau et de la température au niveau des emplacements de récepteur.

7. Le procédé selon l'une quelconque des revendications 1 à 6, **caractérisé en ce qu'**une décision sur la poursuite de l'acquisition de données, le changement de mode de fonctionnement, le changement d'emplacement ou la récupération de tous les, ou d'une partie des, instruments est effectuée après une évaluation des données acquises et/ou une interprétation complète ou partielle.

8. Un appareil pour la surveillance électromagnétique de cibles électriquement résistives potentiellement contenant des réservoirs d'hydrocarbures, dans lequel l'appareil comprend:

- un câble immergé orienté verticalement (7a) qui est agencé pour fonctionner comme émetteur d'un champ électromagnétique;

- une source d'énergie électrique et un transformateur qui sont agencés pour alimenter le câble émetteur (7a) avec des séries d'impulsions de type méandre, la durée d'une impulsion individuelle étant dans la plage de 0,01 à 50 secondes, l'amplitude de 100 à 5000 A et ayant un front arrière raide; **caractérisé en ce que** l'appareil comprend en outre:

- une câble immergé orienté horizontalement (10a) installé dans la zone proximale de l'émetteur (7a) et agencé pour mesurer le champ électrique pendant les pauses entre les impulsions de courant.

9. Un appareil pour la surveillance électromagnétique de cibles électriquement résistives potentiellement contenant des réservoirs d'hydrocarbures, dans lequel l'appareil comprend:

- un câble immergé orienté horizontalement (7b) qui est agencé pour fonctionner comme émetteur d'un champ électromagnétique;

- une source d'énergie électrique et un transformateur qui sont agencés pour alimenter le câble émetteur (7b) avec des séries d'impulsions de type méandre, la durée d'une impulsion individuelle étant dans la plage de 0,01 à 50 secondes, l'amplitude de 100 à 5000 A et ayant un front arrière raide; **caractérisé en ce que** l'appareil comprend en outre:

- une câble immergé orienté verticalement (10b) installé dans la zone proximale de l'émetteur (7b) et agencé pour mesurer le champ électrique pendant les pauses entre les impulsions de courant.

10. L'appareil selon la revendication 8 ou 9, **caractérisé en ce qu'**il comprend d'autres câbles de réception pour recevoir et enregistrer simultanément des composants du champ électrique dans la zone proximale de l'émetteur.

11. L'appareil selon l'une quelconque des revendications 8 à 10, **caractérisé en ce que**, en outre, il existe

**10**

des transpondeurs et des capteurs d'inclinaison (12) placés aux extrémités des câbles d'émetteur et de récepteur (7a, 7b, 10a,10b).

12. Appareil selon l'une quelconque des revendications 8 à 11, **caractérisé en ce que**, en outre, il existe des capteurs de pression et des capteurs de température placés aux extrémités des câbles de réception (10a, 10b).

13. L'appareil selon l'une quelconque des revendications 8 à 12, **caractérisé en ce qu'**il comprend des moyens (5, 6, 13) pour la transmission en temps réel d'au moins une sélection des données acquises à une unité centrale de traitement.

Fig. 1a

Fig. 1b

Fig. 1c

Fig. 1d

Fig. 2a

Fig. 2b

Fig. 3a

Fig. 3b

Fig. 4a

Fig. 4b

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NO 20055168
- US 4644892 A
- US 4617518 A
- US 5563513 A
- US 6320386 B1
- US 0052685 A1
- US 0048105 A1
- US 6628119 B1
- US G01V00312 A

- US G01V00100 A
- US G01V00308 A
- US 324334000 B
- WO 0157555 A1
- WO 0214906 A1
- WO 03025803 A1
- WO 03034096 A1
- WO 03048812 A1

**Non-patent literature cited in the description**

- **AMUNDSEN H.E.F. ; FANAVOLL S. ; LOSETH L. ; SIMONSEN I. ; SKOGEN E.** *Svanen Sea Bed Logging (SBL) Survey Report,* 2003 **[0047]** ₎
- **AMUNDSEN H.E.F. ; JOHANSEN S. RØSTEN T.** A Sea Bed Logging (SBL) calibration survey over the Troll Gas Field. *66th EAGE Conference & Exhibition,* 2004
- **CHAVE A.D. ; COX C.S.** Controlled Electromagnetic Sources for Measuring Electrical conductivity Beneath the Oceans 1. Forward Problem and Model Study. *Journal of geophysical Research,* 1982, vol. 87 (B7), 5327-5338
- Electrical Exploration Methods for the Seafloor. **CHAVE A. D. ; CONSTABLE S.C. ; EDWARDS R.N.** Applied Geophysics, v. 2, Soc. Explor. Geophysics, Tusla, Okla. 1991, vol. 2, 931-966
- **CHEESMAN S.J. ; EDWARDS R.N. ; CHAVE A.D.** On the theory of sea floor conductivity mapping using transient electromagnetic systems. *Geophysics,* 1987, vol. 52 (N2), 204-217
- **CHEW W.C. ; WEEDON W.H.** A 3D perfectly matched medium from modified Maxwell's equations with stretched coordinates. *IEEE Microwave and Guided Wave letters,* 1994, vol. 4, 268-270
- **COX C.S. ; CONSTABLE S.C. ; CHAVE A.D. ; WEBB S.C.** Controlled source electromagnetic sounding of the oceanic lithosphere. *Nature,* 1986, vol. 320, 52-54
- **CONSTABLE S.C. ; ORANGE A.S. ; HOVERSTEN G.M. ; MORRISON H.F.** Marine magnetotellurics for petroleum exploration. *Geophysics,* 1998, vol. 63 (3), 816-825
- **CONSTABLE.** Marine electromagnetic methods - A new tool for offshore exploration. *The Leading Edge,* 2006, vol. 25, 438-444

- **CONSTABLE ; C. J. WEISS.** Mapping thin reservoirs and hydrocarbons with marine EM methods: Insights from 1D modeling. *Geophysics,* 2006, vol. 71, G43-G51
- **COGGON J.H. ; MORRISON. H.F.** Electromagnetic investigation of the sea floor. *Geophysics,* 1970, vol. 35, 476-489
- **EDWARDS R.N. ; LAW, L.K. ; DELAURIER, J.M.** On measuring the electrical conductivity of the oceanic crust by a modified magnetometric resistivity method. *J. Geophys. Res.,* 1981, vol. 68, 11609-11615
- **EDWARDS R.N. ; NOBES D.C. ; GOMEZ-TREVINO E.** Offshore electrical exploration of sedimentary basins: the effects of anisotropy in horizontally isotropic, layered media. *Geophysics,* 1984, vol. 49 (5), 566-576
- **EDWARDS R.N. ; LAW L.K. ; WOLFGRAM P.A. ; NOBES D.C. ; BONE M.N. ; TRIGG D.F. ; DELAURIER J.M.** First results of the MOSES experiment: Sea sediment conductivity and thickness determination. Bute Inlet, British Columbia, by magnetometric off-shore electrical sounding. *Geophysics,* 1985, vol. 450 (1), 153-160
- **EDWARDS R.N. ; CHAVE A.D.** On the theory of a transient electric dipole-dipole method for mapping the conductivity of the sea floor. *Geophysics,* 1986, vol. 51, 984-987
- **EDWARDS R.** On the resource evaluation of marine gas hydrate deposits using sea-floor transient dipole-dipole method. *Geophysics,* 1997, vol. 62 (1), 63-74

- **EDWARDS R.N.** Two-dimensional modeling of a towed in-line electric dipole-dipole sea-floor electromagnetic system: The optimum time delay or frequency for target resolution. *Geophysics,* 1998, vol. 53 (6), 846-853
- **EIDESMO T. ; ELLINGSRUD S. ; MACGREGOR L.M. ; CONSTABLE S. ; SINHA M.C. ; JOHANSEN S.E. ; KONG N. ; WESTERDAHL, H.** Sea Bed Logging (SBL), a new method for remote and direct identification of hydrocarbon filled layers in deepwater areas. *First Break,* 20 March 2002, 144-152
- **ELLINGSRUD S. ; SINHA M.C. ; CONSTABLE S. ; MACGREGOR L.M. ; EIDESMO T. ; JOHANSEN S.E.** Remote sensing of hydrocarbon layers by Sea Bed Logging (SBL): results from a cruise offshore Angola. *The Leading Edge,* 2002, vol. 21, 972-982
- **FARELLY B. ; RINGSTAD C. ; JOHNSTAD C.E. ; ELLINGSRUD S.** Remote Characterization of hydrocarbon filled reservoirs at the Troll field by Sea Bed Logging. *EAGE Fall Research Workshop Rhodos,* 2004
- **GREER A.A. ; MACGREGOR L.M. ; WEAVER R.** Remote mapping of hydrocarbon extent using marine Active Source EM sounding. *66th EAGE Conference & Exhibition,* 2004
- **HABER E. ; ASCHER U. ; OLDENBURG D.W.** Inversion of 3D time domain electromagnetic data using an all-at-once approach: submitted for presentation at the 72nd Ann. Internat. Mtg. *Soc. of Expl. Geophys,* 2002
- **HOWARDS R.N. ; LAW L.K. ; DELAURIER J.M.** On measuring the electrical conductivity of the oceanic crust by a modified magnetometric resistivity method. *J. Geophys. Res.,* 1981, vol. 86, 11609-11615
- **JOHANSEN S.E. ; AMUNDSEN H.E.F. ; RØSTEN T. ; ELLINSGRUD S. ; EIDESMO T. ; BHUYIAN A.H.** Subsurface hydrocarbon detected by electromagnetic sounding. *First Break,* 2005, vol. 23, 31-36
- **KAUFMAN A.A. ; KELLER G.V.** Frequency and transient soundings. Elsevier Science Publ. Co, 1983, 411-454
- **KONG F.N. ; WESTERDAHL H ; ELLINGSRUD, S. ; EIDESMO T. ; JOHANSEN S.** Seabed logging': A possible direct hydrocarbon indicator for deep sea prospects using EM energy. *Oil and Gas Journal,* 13 May 2002, 30-38
- **MACGREGOR L. ; SINHA M.** Use of marine controlled-source electromagnetic sounding for sub-basalt exploration. *Geophysical prospecting,* 2000, vol. 48, 1091-1106
- **MACGREGOR L. ; SINHA M. ; CONSTABLE S.** Electrical resistivity of the Valu Fa Ridge, Lau Basin, from marine controlled-source electromagnetic sounding. *Geoph. J. Intern,* 2001, vol. 146, 217-236
- **MACGREGOR L. ; TOMPKINS M. ; WEAVER R. ; BARKER N.** Marine ) active source EM sounding for hydrocarbon detection. *66th EAGE Conference & Exhibition,* 06 June 2004
- **MARINE MT.** in China with Phoenix equipment. Phoenix Geophysics Ltd, December 2004, 1-2
- **SINGER B.SH. ; FAINBERG E.B.** Electromagnetic induction in non-uniform thin layers. *IZMIRAN,* 1985, 234
- **SINGER B. SH.** Method for solution of Maxwell's equations in non-uniform media. *Geophysical Journ. Int.,* 1995, vol. 120, 590-598
- Integral equation approach based on contraction operators and Krylov space optimization. **SINGER, B. SH. ; MEZZATESTA, A. ; WANG, T.** Three-Dimensional Electromagnetics III. ASEG, 2003, vol. 26, 1-14
- **SINGER, B. SH. ; FAINBERG, E. B.** Fast inversion of synchronous soundings with natural and controllable sources of the electromagnetic field. *Izvestiyu, Physics of the Solid Earth,* 2005, vol. 41, 580-584
- *Translated from Fizika Zemli,* 2005, 75-80
- **SINHA, M.C. ; PATEL P.D. ; UNSWORTH M.J. ; OWEN T. R.E. ; MACCORMACK M.R.G.** An Active Source Electromagnetic Sounding System for Marine Use. *Marine Geophys. Res.,* 1990, vol. 12, 59-68
- **TOMPKINS M. ; WEAVER R. ; MACGREGOR L.** Sensitivity to hydrocarbon targets using marine active source EM sounding: diffusive EM mapping methods. *66th EAGE Conference & Exhibition,* 10 June 2004
- **WRIGHT D.A. ; ZIOLKOWSKI A. ; HOBBS B.A.** Hydrocarbon detection with a multi-channel transient electromagnetic survey. *70th Ann. Internat. Mtg,, Soc. of Expl. Geophys,* 2001
- **WICKLUND T.A. ; FANAVOLL S.** Norwegian Sea: SBL case study. *66th EAGE Conference & Exhibition,* 10 June 2004
- **WOLFGRAM P.A. ; EDWARDS R.N. ; LAW L.K. ; BONE M.N.** Polymetallic sulfide exploration on the deep sea floor: The feasibility of the MINI-MOSES experiment. *Geophysics,* 1986, vol. 51 (9), 1808-1818
- **YUAN J. ; EDWARD R.N.** Towed seafloor electromagnetics and assessment of gas hydrate deposits. *Geophys. Res. Lett.,* 2001, vol. 27 (6), 2397-2400
- **YUAN J. ; EDWARD R.N.** The assessment of marine gas hydrates through electrical remote sounding: Hydrate without BSR?. *Geophys. Res. Lett.,* 2004, vol. 27 (16), 2397-2400
- **ZIOLKOVSKY A. ; HOBBS B. ; WRIGHT D.** First direct hydrocarbon detection and reservoir monitoring using transient electromagnetics. *First Break,* 2002, vol. 20 (4), 224-225